# EUROPÄISCHE PATENTSCHRIFT

(11) **EP 3 514 451 B1**
(45) Veröffentlichungstag und Bekanntmachung des Hinweises auf die Patenterteilung: **08.09.2021**
(21) Anmeldenummer: 19151645.9
(22) Anmeldetag: 14.01.2019
(51) Int. Cl.: F21V 21/04

(54) **HALTERUNG FÜR EINE LEUCHTE UND BELEUCHTUNGSELEMENT**
HOLDER FOR A LIGHT AND LIGHTING ELEMENT
SUPPORT POUR UN LUMINAIRE ET ÉLÉMENT D'ÉCLAIRAGE

(30) Priorität: 23.01.2018 DE 102018101384
(43) Veröffentlichungstag der Anmeldung: 24.07.2019
(73) Patentinhaber: SCHOTT AG, 55122 Mainz (DE)
(72) Erfinder: DIETRICH, Andreas, 55452 Guldental (DE)
(74) Vertreter: Blumbach · Zinngrebe Patentanwälte PartG mbB

(56) Entgegenhaltungen:
- EP-A2- 2 312 200
- EP-A2- 2 541 126
- DE-A1-102014 013 103
- DE-U1-202013 100 276
- KR-B1- 100 926 772
- US-A1- 2005 174 791

## Beschreibung

Die vorliegende Erfindung betrifft allgemein eine Halterung für eine Leuchte sowie ein Beleuchtungselement.

Insbesondere betrifft die Erfindung ein Beleuchtungselement, welches als Leseleuchte verwendet werden kann, etwa in einem Fahrzeug oder Luftfahrzeug.

Der Markt für Leuchtmittel und damit verbunden auch derjenige für Leuchten und Beleuchtungsanordnungen unterliegt einer rasanten technologischen Entwicklung. So ergeben sich beständig neue Einsatzfelder für Leuchtmittel in ihrem aktuellen Entwicklungsstadium. In diesem Zusammenhang sind besonders die Licht emittierenden Dioden (LED) zu nennen, deren aktuelle Entwicklungen neue Einsatzmöglichkeiten, etwa im Automotive- oder Luftfahrtbereich, bieten.

Gerade im Luftfahrtbereich sind die Anforderungen besonders hoch, da in der Regel wenig Platz für die Leuchten zur Verfügung steht und zudem hohe Sicherheitsanforderungen, etwa in Bezug auf die Befestigung, bestehen. So gibt es derzeit verschiedene Bestrebungen, LED-Leuchten im Umfeld der Kabinenbeleuchtung von Verkehrsflugzeugen einzusetzen.

In diesem Umfeld gibt es verschiedene Einsatzmöglichkeiten. Zum einen ist hier die großflächige Kabinen-Innenbeleuchtung zu nennen, welche bisher hauptsächlich mit herkömmlichen Lichtpanelen ermöglicht wird. Hier gibt es Ansätze, diese Innenbeleuchtung, welche etwa hohen Anforderungen an eine konstante Helligkeit unterliegt, durch LED-Leuchten zu ersetzen, wie es beispielsweise in der Druckschrift DE 10 2015 103 332 A1 beschrieben ist.

Die Druckschrift EP 2 541 126 A2 beschreibt einen Einbauring zum Einbau einer Einbauleuchte in eine Platte. Ein Einbauring mit selbstschneidenden Halteabschnitten wird gezeigt, die sich beim Einbohren des Einbauringes in die Innenwandung der Öffnung der Platte einschneiden und dort für einen festen Halt des Einbaurings in der Platte sorgen sollen. Die Druckschrift DE 10 2014 013193 A1 beschreibt ebenfalls eine Montageeinheit für das Einbauen eines Beleuchtungsmoduls in eine Wandöffnung, wobei mehrere rohrförmige Bauteile zum Einsatz kommen. Die Druckschrift KR 100 926 772 B1 beschreibt eine Deckenhalterung für LED-Leuchtelemente, welche eine bessere Wärmeabfuhr ermöglichen soll. Die Druckschrift US 2005/174791 A1 beschreibt eine weitere Beleuchtungsbaugruppe. Die Druckschrift DE 20 2013 100276 U1 beschreibt ein Leuchtdiodenmodul mit einem Leuchtengehäuse, welches Haltevorsprünge aufweist.

Eine Besonderheit stellen Leuchten dar, welche etwa als Leseleuchten in Verkehrsflugzeugen verwendet werden sollen. Aufgrund der eher ungünstigen Lichtverhältnisse zum Lesen in den Verkehrsflugzeugen mit in Reihe angeordneten Fluggastsitzen und am Kabinendach darüber vorgesehenen Leseleuchten sind kombinierte Fluggastsitze entwickelt worden, welche jeweils über eine eigene Leseleuchte verfügen. Einen derartigen Fluggastsitz beschreibt etwa die EP 1 600 375 B1. Typischerweise sind derartige Leuchten mit mehreren Schrauben an der Sitzkonstruktion befestigt, so dass sich die Montage und die Demontage zeitaufwendig gestalten. Bei einer Demontage ist es erforderlich, nicht nur das passende Werkzeug zur Hand zu haben, sondern es ist auch besondere Umsicht in Bezug auf die Verbindungselemente erforderlich, damit diese nicht verloren gehen. Zudem ist das Befestigen mit mehreren Schrauben mit einem vergleichsweise hohen Zeitaufwand verbunden und erfordert zudem das Anbringen einer Blende zur Abdeckung der Schrauben.

Die Platzverhältnisse sind hier häufig noch ungünstiger als bei der allgemeinen Kabinen-Innenbeleuchtung. Erschwerend kommt hinzu, dass für Reparatur- und Wartungstätigkeiten auch eine Demontierbarkeit gewährleistet werden muss. Neben dem Verhindern eines ungewollten Lösens kommt hinzu, dass aufgrund der im Luftfahrtbereich hohen Sicherheitsanforderungen auch dem ungewollten Verlieren von Verbindungselementen bei der Demontage möglichst entgegengewirkt werden soll. So kann beispielsweise eine kleine Schraube, die während der Demontage verloren geht, erheblichen Schaden anrichten, wenn sie etwa in Öffnungen oder Schächte im Flugzeugboden fällt und dort ungewollt Bewegungen blockieren oder sogar einen Kurzschluss hervorrufen kann.

Wünschenswert wäre demnach eine Halterung für eine Leuchte sowie ein hierauf basierendes Beleuchtungselement, welches einfach und sicher montiert und wieder demontiert werden kann. Das Beleuchtungselement soll dabei vorzugsweise als Leseleuchte verwendet werden können.

Dabei soll insbesondere der Einsatz zusätzlicher Verbindungselemente wie beispielsweise Schrauben vermieden werden. Ebenso sollen die besonderen Vorschriften, welche im Luftfahrtbereich gelten, eingehalten werden, so dass eine Verwendung etwa in Verkehrsflugzeugen möglich ist.

Weiterhin sollen sowohl die Montage als auch die Demontage einfach und rasch vonstattengehen, wobei die Montage möglichst ohne Werkzeug erfolgen soll. Die Demontage soll zudem zerstörungsfrei möglich sein, um Reparaturen einfach durchführen zu können.

Dieser Aufgabe haben sich die Erfinder angenommen.

Überraschend einfach wird diese Aufgabe durch eine Halterung für eine Leuchte sowie ein Beleuchtungselement, insbesondere eine Leseleuchte, nach einem der unabhängigen Ansprüche gelöst.

Bevorzugte Ausführungsformen und Weiterbildungen der Erfindung sind den jeweiligen Unteransprüchen zu entnehmen.

Gegenstand der Erfindung ist somit eine Halterung für eine Leuchte. Die Halterung ist ausgebildet für eine lösbare Befestigung in einer Öffnung eines Aufnahmeelements, vorzugsweise in einer kreisförmigen Öffnung eines Aufnahmeelements.

Die Halterung kann hierzu ein kreiszylinderförmiges Befestigungselement mit einer Seitenwand, einer Frontseite und einer gegenüberliegend angeordneten Rückseite umfassen. Das Befestigungselement ist vorzugsweise in Form eines geraden Kreiszylinders ausgebildet. Die Frontseite zeigt im montierten Zustand zu dem Benutzer hin, die Rückseite im montierten Zustand von dem Benutzer weg.

Die Frontseite kann besonders günstig eine Öffnung zur Aufnahme und Halterung einer Leuchte umfassen. Ein erfindungsgemäßes Beleuchtungselement kann demnach die Halterung und eine in der Halterung montierte Leuchte umfassen. In einer besonders bevorzugten Ausführungsform ist das Beleuchtungselement als Leseleuchte ausgebildet.

Das Befestigungselement kann daher annähernd die Grundform eines einseitig offenen, geraden Kreiszylinders aufweisen. Zur Befestigung mit dem Aufnahmeelement kann die Seitenwand zumindest eine auf der Außenseite angeordnete, radial nach außen hervorstehende längliche Rippe umfassen. Weiterhin ist vorgesehen, dass auf der Außenseite der Seitenwand zumindest ein radial nach außen hervorstehendes Rastelement angeordnet ist.

Diese vorgeschlagene erfindungsgemäße Verbindung der Halterung mit dem Aufnahmeelement, umfassend zumindest eine Rippe und zumindest ein Rastelement, ermöglicht es auf überraschend einfache Weise, eine Befestigung für ein Beleuchtungselement zur Verfügung zu stellen, welche einerseits sehr einfach montiert und auch wieder demontiert werden kann, andererseits aber auch über eine Sicherung gegen ungewolltes Lösen verfügt.

Die zumindest eine Rippe des Befestigungselements wirkt dabei im Zusammenspiel mit einer passgenau gegengleich ausgebildeten Öffnung des Aufnahmeelements ähnlich einem Bajonettverschluss. Eine derartige Befestigung zeichnet sich durch eine schnell herstell- und lösbare mechanische Verbindung zwischen einem zylindrischen Befestigungselement und einem Aufnahmeelement aus, wobei die erfindungsgemäße Halterung durch Ineinanderstecken oder Einschieben in die Öffnung und nachfolgendem Drehen mit dem Aufnahmeelement fest verbunden und durch entgegengesetztes Drehen wieder getrennt werden kann.

Das zusätzliche Rastelement kann nach dem Einschieben und Drehen der Halterung in einer Montageendposition, demnach im vorgesehenen Einbauzustand, in eine entsprechend passgenau ausgebildete Ausnehmung in der Öffnung des Aufnahmeelements eingreifen und somit eine weitere formschlüssige Verbindung bewirken.

Dies stellt eine wesentliche Anforderung für eine Verwendung im Luftfahrbereich dar, in welchen rein kraftschlüssige Verbindungen nicht bevorzugt sind.

Vorzugsweise ist die für die Montage der Halterung vorgesehene Öffnung des Aufnahmeelements passgenau gegengleich zu der Anordnung von Rippe und Rastelement ausgebildet. Daher kann die Öffnung des Aufnahmeelements geeignete Aussparungen bzw. Ausnehmungen zur Aufnahme der zumindest einen Rippe und des Rastelements umfassen.

Zur besonders einfachen Montage kann die Seitenwand auf der Frontseite einen über die Außenseite der Seitenwand radial hervorstehenden, teilweise oder vollständig umlaufenden Kragen umfassen. In einer Ausführungsform kann dieser Kragen eine Anschlagsfläche zu dem Aufnahmeelement definieren und somit das axiale Einschieben der Halterung in die Öffnung geometrisch begrenzen. Zusätzlich oder anstelle des Kragens kann in einer weiteren Ausführungsform die Seitenwand auch mit einem stufenförmigen Vorsprung ausgebildet sein, welcher im Einbauzustand eine axiale Anschlagsfläche zu dem Aufnahmeelement definiert und das axiale Einschieben begrenzt.

Mit einem vollständig umlaufenden Kragen kann auch das Eindringen von Fremdpartikeln in den Spalt, der sich im Einbauzustand zwischen der kreisförmigen Öffnung des Aufnahmeelements und dem Befestigungselement ergibt, unterbunden werden. Die Außenseite des Kragens kann unterschiedlich gestaltet sein und dabei verschiedenen Designaspekten Rechnung tragen.

Um das Einschieben in die Öffnung weiter zu vereinfachen, kann die Außenwandung der Seitenwand leicht konisch mit einer Verjüngung des Querschnitts zur Rückseite hin ausgebildet sein.

In einer bevorzugten Ausführungsform umfasst die Außenseite der Seitenwand eine weitere, also insgesamt zwei, radial nach außen hervorstehende Rippen, welche vorzugsweise tangential zueinander beabstandet angeordnet sind. Die Verbindung kann auf diese Weise mechanisch besonders stabil und kippsicher ausgeführt werden. Vorzugsweise sind die beiden Rippen dabei über einen Umfangsabschnitt von über 180 Grad verteilt angeordnet auf der Außenseite der Seitenwand.

Besonderes bevorzugt sind die beiden Rippen gegenüberliegend auf der Außenseite der Seitenwand angeordnet. Dies unterstützt zudem ein gerades Einschieben der Halterung in die Öffnung des Aufnahmeelements, da einem Verkanten entgegengewirkt werden kann.

Es können auch mehr als zwei Rippen, etwa drei oder vier Rippen, vorgesehen sein, welche dann über den Umfangsabschnitt tangential beabstandet zueinander angeordnet sein können. Hierbei ist aber darauf zu achten, dass zum einen noch ein genügender Freiraum zwischen den einzelnen Rippen vorhanden ist, welcher ein Einschieben in die Öffnung ermöglicht, zum anderen aber auch nach der Drehung ein entsprechender Überlapp der Rippen zu Stegen zwischen den Ausnehmungen der Öffnung des Aufnahmeelements erreicht wird, um eine mechanisch stabile Befestigung durch die Überschneidung zu schaffen.

Vorzugsweise sind die Rippen tangential zur Mittenachse angeordnet, verlaufen also in ihrer länglichen bzw. in ihrer größten Ausdehnung parallel zu einem Schnitt senkrecht zur Mittenachse des Befestigungselements. Es ist auch möglich, die Rippen wendelartig mit einer leichten Neigung ähnlich einem Gewinde auszubilden. Im Fall von zumindest zwei Rippen können zumindest diese zwei Rippen oder auch sämtliche vorgesehenen Rippen eine identische Länge aufweisen.

In einer weiteren Ausführungsform sind im Fall von zumindest zwei Rippen zumindest zwei Rippen mit einer unterschiedlichen Länge ausgebildet. Bei entsprechender Ausbildung der Ausnehmungen in der Öffnung des Aufnahmeelements kann auf diese Weise besonders einfach sichergestellt werden, dass die Halterung zur Montage nur genau in einer einzigen vorbestimmten Orientierung in die Öffnung eingeschoben werden kann. Bei einer Ausbildung der Halterung mit mehr als zwei Rippen genügt es im Allgemeinen, wenn eine der Rippen eine von der Länge der übrigen Rippen abweichende Länge aufweist und die Ausnehmung in der Öffnung dementsprechend angepasst ist.

Die Rippen sollen zum einen einen mechanisch stabilen Halt im Einbauzustand gewährleisten, also eine hinreichend hohe Festigkeit gegenüber einem Herausziehen der Halterung aus der Öffnung des Aufnahmeelements aufweisen. Andererseits sollten sie auch bezüglich ihrer Höhe nicht zu groß ausgebildet sein, um die Öffnung in dem Aufnahmeelement nicht zu groß dimensionieren zu müssen. Die zumindest eine Rippe kann daher eine Höhe, gemessen gegenüber der Außenseite der Seitenwand, zwischen 0,1 und 15 mm, bevorzugt zwischen 0,2 und 5 mm, aufweisen.

Die Länge der Rippen, also ihre tangentiale Ausdehnung zur Mittenachse, hängt dabei von der Anzahl der Rippen insgesamt ab. Im Allgemeinen kann es günstig sein, die Rippen länger zu gestalten, wenn nur wenige Rippen vorgesehen sind, bzw. kürzer, wenn mehr als eine Rippe vorgesehen sind. Hierbei ist darauf zu achten, einen stabilen Formschluss durch einen längeren Überschneidungsbereich im Einbauzustand zu erhalten.

Es hat sich als günstig herausgestellt, wenn die Rippen sich tangential zur Mittenachse über einen Winkel zwischen 5° und 65°, bevorzugt zwischen 10° und 60° und besonders bevorzugt zwischen 15° und 55° erstrecken. Der sich aus der Summe der Überschneidungsbereiche der im Einbauzustand der Halterung wirkenden Rippen ergebende Winkelbereich kann vorzugsweise in einem Bereich zwischen 10° und 180°, bevorzugt zwischen 20° und 150° liegen.

Das Rastelement ist dabei vorzugsweise in einem Umfangsabschnitt auf der Außenfläche der Seitenwand in einem Abschnitt angeordnet, welcher keine Rippe aufweist. Diese Funktionstrennung ermöglicht es, eine einfache Montage einerseits sowie einen stabilen und sicheren Sitz der Halterung in der Öffnung im Einbauzustand andererseits zu gewährleisten.

Das Rastelement kann dann in der Montageendposition, also zum Abschluss der Drehung der Halterung in der Öffnung des Aufnahmeelements, in eine weitere, passgenaue Ausnehmung des Aufnahmeelements einrasten. Auf diese Weise kann nach erfolgter Montage eine Drehung entgegen der Montagedrehrichtung verhindert und so ein ungewolltes Lösen unterbunden werden.

Die vorgeschlagene Befestigung von Halterung und Aufnahmeelement umfasst demnach zwei in zwei unterschiedlichen Richtungen wirkende und sich ergänzende formschlüssige Verbindungen. Zur Entriegelung, etwa für Reparatur- oder Wartungstätigkeiten, kann das Rastelement entrastet werden, wobei die Entrastung in besonders einfacher Weise durch ein Beaufschlagen mit einer Kraft in Richtung der Mittenachse der Halterung erfolgen kann. Demnach kann das Rastelement ein kurzes Stück nach hinten, also vom Bediener aus gesehen in Richtung Rückseite, zum Lösen bewegt werden, was die Entriegelung besonders einfach macht.

Erfindungsgemäss umfasst das Befestigungselement neben dem Rastelement ein weiteres Federelement als Toleranzausgleich gegen ein radiales Spiel in der Montageendposition. Im Einbauzustand kann dieses mit der Innenwand der Öffnung des Aufnahmeelements in Wirkzusammenhang stehen, wenn das Rastelement eingerastet ist. Dies ist vorteilhaft, weil das Befestigungselement zum einfacheren Einschieben mit einem kleinen Untermaß gegenüber dem Durchmesser der Öffnung ausgebildet sein kann. Der Toleranzausgleich ist dabei vorzugsweise so an dem Befestigungselement angeordnet, dass er gegenüberliegend zu dem Rastelement ausgebildet ist.

Das Rastelement und das Federelement können beispielsweise auf der Rückseite der Halterung angeordnet bzw. als Teil einer Rückwand ausgebildet sein. Zusätzlich können selbstverständlich weitere Öffnungen oder Aussparungen auf der Rückseite vorgesehen sein, etwa eine Durchgangsöffnung für ein Anschlusselement, beispielsweise zur Durchführung eines Anschlusskabels.

Weiterhin kann auf der Rückseite eine zwischen der Durchgangsöffnung für das Anschlusskabel und der Seitenwand verlaufende Aussparung vorgesehen sein zur Aufnahme und/oder Führung des Anschlusskabels, welches beispielsweise von einer in der Öffnung des Befestigungselements angeordneten Leuchte durch die Durchgangsöffnung der Rückseite hindurch zu einer Außenseite verlegt ist.

Diese Aussparung kann hierzu eine Tiefe und/oder Breite von etwa 2 bis 4 mm aufweisen, was es ermöglicht, beispielsweise gängige vieradrige Anschlusskabel zu verwenden. In montierter Position kann die Aussparung nach unten weisen, so dass unabhängig von der Drehrichtung im montierten Zustand immer eine identische Kabelverlegung ermöglicht wird.

In einer besonders bevorzugten Ausführungsform ist die Halterung derart gestaltet, dass sich eine geringe Einbautiefe ergibt, also eine geringe Ausdehnung entlang der Längsachse. Dies ist nicht trivial, da die Halterung einerseits die Aufnahme und Halterung einer Leuchte in der Öffnung des Befestigungselements sowie auch die entsprechende elektrische Kontaktierung ermöglichen soll, andererseits aber auch sicher und fest in der Öffnung des Aufnahmeelements montiert werden soll.

Die Kombination der bajonettartigen Verbindung und dem Rastelement sowie die erfindungsgemäße Anordnung der zugehörigen Bauteile ermöglicht es in überraschend einfacher Weise, diese maximale Ausdehnung entlang der Mittenachse so festzulegen, dass die Länge der Halterung höchstens 2,54 cm (1 Zoll) beträgt. Es ist auch möglich, diese Abmessung auf höchstens 1,9 cm (¾ Zoll) und besonders bevorzugt höchstens 1,27 cm (½ Zoll) zu reduzieren. Diese geringe Ausdehnung eröffnet vielerlei Einbaumöglichkeiten, beispielsweise direkt in einer Kopf- oder Nackenstütze eines Fluggastsitzes.

Mit von der Erfindung umfasst ist weiterhin ein Beleuchtungselement, umfassend eine Halterung wie vorstehend erläutert und eine vorzugsweise darin montierte Leuchte. Das Beleuchtungselement kann im Personenbeförderungsbereich, insbesondere im Automotive- oder Luftfahrbereich, in einem Zug, in einem Schiff, im Bereich der Architektur oder als Innen- oder Außenbeleuchtung, verwendet werden. Bei entsprechender Gestaltung der Leuchte kann das Beleuchtungselement besonders gut als Leseleuchte verwendet werden.

Das erfindungsgemäße Beleuchtungselement ermöglicht eine lösbare Befestigung in einer Öffnung eines Aufnahmeelements, vorzugsweise in einer zur Halterung passgenau gegengleich ausgebildeten, kreisförmigen Öffnung.

Die Leuchte kann beispielsweise mit modernen, auf der LED-Technik basierenden Lampen bestückt sein.

Selbstverständlich sind auch andere gängige Lampen möglich, allerdings können sich hier Restriktionen in Bezug auf eine gewünschte geringe Einbautiefe ergeben.

Ferner umfasst von der Erfindung ist ein Aufnahmeelement, insbesondere ein Panel, welche beispielsweise im Innenraum eines Verkehrsflugzeuges angebracht ist und damit einen Bestandteil einer Kabineninnenverkleidung darstellt, oder ein Sitz, insbesondere ein Fluggastsitz, aufweisend eine kreisförmige Öffnung, welche ausgebildet ist, das erfindungsgemäße Beleuchtungselement aufnehmen zu können.

In die Öffnung des Aufnahmeelements kann das Beleuchtungselement montiert werden, so dass sich, etwa bei einer Montage im Kopfbereich eines Fluggastsitzes, auf einfache Art und Weise eine individuelle Lesebeleuchtung für einen Fluggast realisieren lässt. Daher ist von der Erfindung auch ein Panel umfasst, ein Sitz oder ein Fluggastsitz, aufweisend ein erfindungsgemäßes Beleuchtungselement.

Schließlich umfasst die vorliegende Erfindung auch ein Verfahren zur Montage sowie zur Demontage der Halterung und/oder des Beleuchtungselements. Bei der Montage können die Halterung oder das Beleuchtungselement zunächst in einer Richtung parallel zur Längsachse in die Öffnung des Aufnahmeelements eingeschoben werden und sodann nach Erreichen der vorgesehenen Position, welche beispielsweise durch Aufliegen des überstehenden Kragens auf dem Aufnahmeelement und/oder durch die Ausbildung der Seitenwand mit einem stufenförmigen Vorsprung, welcher im Einbauzustand eine axiale Anschlagsfläche zu dem Aufnahmeelement bildet, definiert sein kann, bis zu einem Anschlag gedreht werden. Hierbei kann das Rastelement durch das Aufnahmeelement ausgelenkt werden. Wird die Montageendposition erreicht, kann das Rastelement in die dafür vorgesehene Ausnehmung in dem Aufnahmeelement einrasten und ein Zurückdrehen entgegen der Montagedrehrichtung wird wirksam verhindert. Das Rastelement ist vorzugsweise in Form eines Schnapphakens ausgebildet, um einem selbständigen Lösen und Entriegeln sicher entgegenzuwirken.

Besonders günstig kann das Einrasten mit einem Einrastgeräusch verbunden werden, so dass der Bediener ein akustisches Signal erhält und damit eine akustische Rückmeldung, die ihn über den Abschluss der korrekten Montage informiert.

Für die Montage wird kein Werkzeug benötigt, da das Rastelement von Vorteil in Montagedrehrichtung eine Schräge umfasst, welche durch die Drehbewegung eine federnde Auslenkung bewirkt und welche bei Erreichen der Montageendposition das Einrasten ermöglicht. Die Auslenkung kann von Vorteil nach hinten erfolgen, also vom Bediener aus gesehen in die entgegengesetzte Richtung.

Die Leuchte in der Öffnung des Befestigungselements kann von Vorteil dreh- und/oder klappbar gehaltert sein. Das dreh und/oder klappbare Haltern ermöglicht in besonders geeigneter Weise eine Verwendung des Beleuchtungselements als Leseleuchte.

Zudem bietet das dreh und/oder klappbare Haltern der Leuchte den großen Vorteil, dass bei einer Demontage ein Zugriff von vorne, also von der Bedienerseite aus, auf das Rastelement sehr einfach ermöglicht werden kann, indem beispielsweise die Leuchte bis zu einem Anschlag gedreht und aufgeklappt wird und auf diese Weise einen Teil der Innenwandung des Befestigungselements frei gibt. Auf diese Weise kann etwa mit einem Standardwerkzeug, beispielsweise einem Schraubendreher, das Rastelement nach hinten gedrückt und auf diese Weise entriegelt werden. Nach der Entriegelung kann die Halterung bzw. das Beleuchtungselement entgegen der Montagedrehrichtung gedreht werden, und die Halterung bzw. das Beleuchtungselement können wieder aus der Öffnung des Aufnahmeelements herausgezogen werden.

Die erfindungsgemäße Halterung und das Beleuchtungselement weisen eine Reihe von Vorteilen auf.

So ist eine einfache Montage und Demontage von vorne möglich. Diese geht zudem sehr rasch, da bei der Montage lediglich eine translatorische und eine rotatorische Bewegung erforderlich sind, die in einem einzigen Arbeitsgang direkt hintereinander in wenigen Sekunden durchgeführt werden können. Auch die Demontage der erfindungsgemäßen Halterung und der erfindungsgemäßen Leuchte gestaltet sich einfach und unkompliziert.

Von großem Vorteil ist weiterhin, dass keine rein kraftschlüssige Verbindung vorliegt, sondern vielmehr auf einen besonders sicheren, in zwei Richtungen wirkenden Formschluss der Verbindung gesetzt wird. Dies ermöglicht es, auch vergleichsweise hohe Haltekräfte zu definieren.

Die erfindungsgemäße Halterung für eine Leuchte sowie das hierauf basierende Beleuchtungselement genügen damit auch den luftfahrttechnischen Anforderungen, so dass insbesondere ein Einsatz im Luftfahrtbereich, etwa im Bereich der Kabinen-Innenbeleuchtung, möglich ist.

Die Schnittstelle zur Schaffung der Verbindung ist sehr einfach und kostengünstig herzustellen. In der Öffnung des Aufnahmeelements ist lediglich eine einfache Kontur erforderlich, welche beispielsweise durch Ausfräsen erzeugt werden kann. Die Halterung selbst kann dementsprechend als Frästeil, beispielsweise aus Aluminium, oder als Kunststoffspritzgussteil hergestellt werden, in das die zumindest eine Rippe und das Rastelement mit eingebracht sind.

Besonders günstig ist es auch, dass keine losen Teile bzw. zusätzlichen Verbindungselemente wie beispielsweise Schrauben verwendet werden, welche bei der Montage oder bei der Demontage herunterfallen oder verloren gehen können.

Weitere Einzelheiten der Erfindung ergeben sich aus der Beschreibung der dargestellten Ausführungsbeispiele und den angefügten Ansprüchen.

### Die Zeichnungen zeigen:

- Fig. 1: eine Schrägansicht eines erfindungsgemäßen Beleuchtungselements, umfassend eine erfindungsgemäße Halterung und eine Leuchte,
- Fig. 2: einen Ausschnitt eines Aufnahmeelements mit einer Öffnung zur Aufnahme des erfindungsgemäßen Beleuchtungselements,
- Fig. 3: in einer frontseitigen Schrägansicht einen Ausschnitt eines Aufnahmeelements sowie ein Beleuchtungselement vor Beginn der Montage,
- Fig. 4: in einer rückseitigen Schrägansicht einen Ausschnitt eines Aufnahmeelements sowie ein Beleuchtungselement vor Beginn der Montage,
- Fig. 5: eine Frontansicht eines montierten Beleuchtungselements in einem Aufnahmeelement,
- Fig. 6: in einer rückseitige Schrägansicht einen Ausschnitt eines Aufnahmeelements sowie ein Befestigungselement nach Beginn der Montage in einer Position, bei der noch keine Drehung erfolgt ist,
- Fig. 7: eine Frontansicht eines in die Öffnung eingeschobenen Beleuchtungselements in einem Aufnahmeelement,
- Fig. 8: in einer rückseitigen Schrägansicht einen Ausschnitt eines Aufnahmeelements sowie ein Befestigungselement nach Abschluss des Einschiebens in einer Orientierung, bei der bereits eine teilweise Drehung in der Montagedrehrichtung erfolgt ist,
- Fig. 9: zeigt in einer rückseitigen Schrägansicht einen Ausschnitt eines Aufnahmeelements sowie ein Befestigungselement in einer Orientierung, die dem Erreichen der Montageendposition entspricht,
- Fig. 10: ein als Leselicht ausgeführtes Beleuchtungselement, welches in einem Aufnahmeelement montiert ist, und
- Fig. 11: eine weitere fronseitige Ansicht eines als Leselicht ausgeführten Beleuchtungselements, welches in einem Aufnahmeelement montiert ist.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

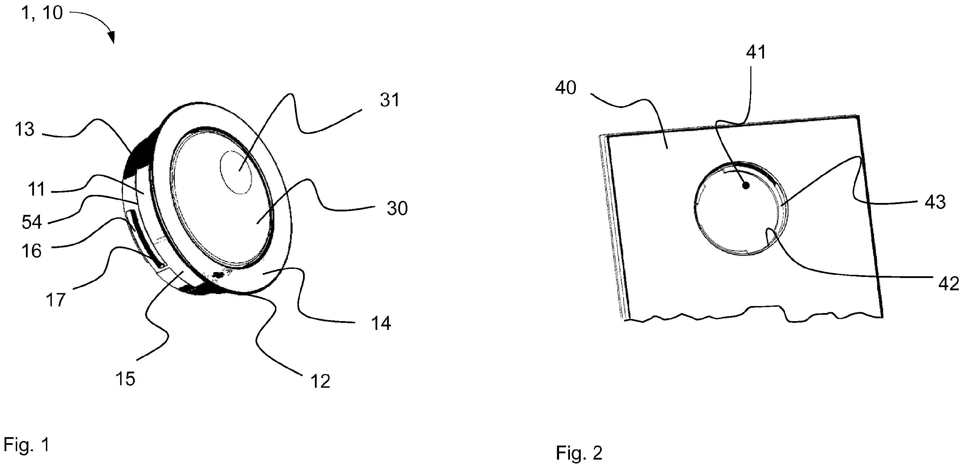

Fig. 1 zeigt in einer Schrägansicht ein Beleuchtungselement 1 in einer bevorzugten Ausführungsform, umfassend die erfindungsgemäße Halterung 10 und eine Leuchte 30. Das Beleuchtungselement 1 ist ohne Beschränkung auf das abgebildete Ausführungsbeispiel als eine Leseleuchte konzipiert.

Die Halterung 10 ist ausgebildet für eine lösbare Befestigung in einer Öffnung eines hierfür vorgesehenen Aufnahmeelements 40, welches rein beispielhaft in Fig. 2 dargestellt ist. Fig. 2 zeigt demnach einen Ausschnitt eines Aufnahmeelements 40 mit einer kreisförmigen Öffnung 41 zur Aufnahme des Beleuchtungselements 1.

Die Halterung 10 umfasst ein kreiszylinderförmiges Befestigungselement 11 mit einer Seitenwand 15, einer Frontseite 12 und einer gegenüberliegend angeordneten Rückseite 13. Das Befestigungselement 11 ist in Form eines geraden Kreiszylinders ausgebildet, wobei im Einbauzustand die Frontseite 12 zu dem Bediener hinweist. Die Leuchte 30 ist in der Öffnung des Befestigungselements 11 fest montiert.

Die Frontseite umfasst eine Öffnung zur Aufnahme der Leuchte 30. Im abgebildeten Beispiel ist diese Öffnung bereits mit der Leuchte 30 bestückt, welche passgenau gegengleich zu der Öffnung ausgebildet ist, also ebenfalls eine Grundform ähnlich einem geraden Kreiszylinder aufweist. Die Leuchte 30 füllt die Öffnung aus, wobei die Innenwandung des Befestigungselements 11 zur Halterung der Leuchte 30 ausgebildet ist.

Im Beispiel ist die Leuchte 30 drehbar um die Längsachse des Beleuchtungselements 1 gelagert, so dass eine Drehung um die Mittenachse für einen Bediener möglich ist. Hierzu ist im Beispiel eine Fingerauflage 31 auf der Bedienseite der Leuchte 30 vorgesehen. Zudem ist die Leuchte 30 auch klappbar gehaltert, d.h. sie kann um eine Achse senkrecht zur Längsachse des Befestigungselements 11 geklappt werden.

Die Seitenwand 15 des Befestigungselements 11 umfasst die Befestigungshilfsmittel. Auf der Außenseite der Seitenwand sind erfindungsgemäß die zumindest eine radial nach außen hervorstehende Rippe 16 und das radial nach außen hervorstehende Rastelement 18 vorgesehen, welches in dieser Darstellung nicht sichtbar ist.

Zur Vereinfachung der Montage ist die Seitenwand 15 leicht konisch nach innen zulaufend ausgebildet. Dies ist allerdings keine notwendige Voraussetzung. Es sollte allerdings ein geringes axiales Spiel zwischen dem Außenumfang der Seitenwand 15 und der Öffnung des Aufnahmeelements 40 vorgesehen sein, um das Einschieben zu erleichtern.

Die Rippe 16 ist als Teil der Seitenwand 15 ausgearbeitet und umfasst einen Anschlag 17, welcher so angeordnet ist, dass er zu der Montageendposition korrespondiert, also zum Abschluss der Drehung der Halterung in der Öffnung in Wirkzusammenhang mit einem Anschlag in der Öffnung des Aufnahmeelements steht und somit ein Überdrehen bei der Montage verhindert.

Die zumindest eine Rippe 16 des Befestigungselements wirkt dabei ähnlich einem Bajonettverschluss, so dass eine rasche Montage gegeben ist, wobei die Verbindung aber auch wieder zerstörungsfrei lösbar im Zuge einer Demontage ist.

Die Seitenwand 15 umfasst auf der Frontseite zusätzlich einen über die Außenwandung radial hervorstehenden, teilweise oder vollständig umlaufenden Kragen 14.

Im dargestellten Ausführungsbeispiel ist dieser Kragen 14 derart ausgebildet, dass er im Montageendzustand dicht mit dem Aufnahmeelement abschließt und auf diese Weise das Eindringen von Fremdpartikeln in den Spalt oder in den Hohlraum, der sich im Einbauzustand zwischen der kreisförmigen Öffnung des Aufnahmeelements 40 und der Außenwand des Befestigungselements 11 ergibt, verhindern kann. Zur Abdichtung kann auch ein weiteres Material, beispielsweise ein bevorzugt dünnes und/oder flexibles Band fest oder lösbar auf die dem Aufnahmeelement 40 zugewandten Seite des Kragens 14 und/oder in die Öffnung 41 ein- bzw. aufgebracht werden, so dass auch das Eindringen von kleinen Teilchen sicher verhindert werden kann. Zur Bedienerseite hin kann der Kragen 14 mit Design- oder Dekorelementen ausgestattet sein, wobei das abgebildete Beispiel ein schlichtes Vorderseitendesign ohne derartige Elemente zeigt.

Zur besonders einfachen Montage ist die Seitenwand 15 mit einem umlaufenden, stufenförmigen Vorsprung, ausgebildet, welcher im Einbauzustand eine Anschlagsfläche zu dem Aufnahmeelement 40 definiert. Dieser stufenförmige Absatz 54 der Seitenwand 15 stellt damit einen axialen Anschlag dar. Auf diese Weise kann die Endposition bei einem axialen Einschieben des 11 in die Öffnung des Aufnahmeelements 40 sehr einfach definiert werden.

Die Öffnung 41 des in der Fig. 2 rein beispielhaft in einem Ausschnitt abgebildeten Aufnahmeelements 40 ist auf der Innenseite mit Ausnehmungen 42 ausgebildet, wodurch nach innen hervorstehende Stege 43 definiert werden, welche die Aufnahme der zumindest einen Rippe 16 der Halterung 10 ermöglichen.

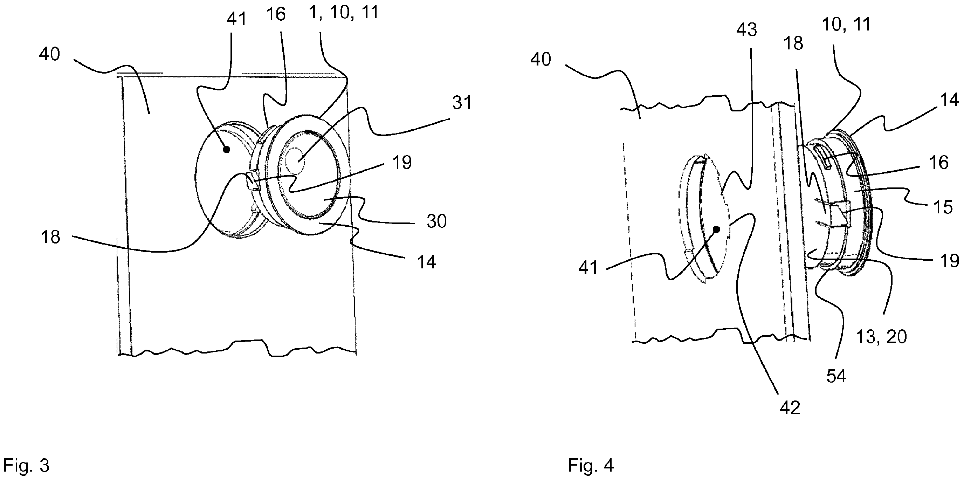

Fig. 3 zeigt in einer Schrägansicht von vorne einen Ausschnitt eines Aufnahmeelements 40 sowie ein Beleuchtungselement 10 vor Beginn der Montage. In der gezeigten Orientierung des Beleuchtungselements relativ zu der Öffnung 41 des Aufnahmeelements 40 ist das radial auf der Außenwand hervorstehende Rastelement 18 gut zu erkennen. In dieser Ansicht ist zudem eine Rippe 16 erkennbar.

In der vorgesehenen Orientierung wird die Halterung 10 in die Öffnung 41 des Aufnahmeelements 40 in einer axialen Bewegung eingeschoben. Der Endpunkt dieser axialen Bewegung ist erreicht, wenn der Kragen 14 auf der Außenfläche des Aufnahmeelements 40 zum Aufliegen kommt. In diesem Beispiel stellt somit der Kragen 14 einen Anschlag bzw. die Begrenzung der axialen Bewegung für die Montage der Halterung 10 dar.

Fig. 4 zeigt in einer Schrägansicht von hinten einen Ausschnitt eines Aufnahmeelements sowie ein Beleuchtungselement vor Beginn der Montage. Die Montageposition entspricht der in Fig. 3 gezeigten, nur die Blickrichtung ist entgegengesetzt.

In dem Ausführungsbeispiel ist die Rückseite 13 des Befestigungselements 11 mit einer geschlossenen Rückwand 20 ausgebildet. Aus dieser Rückwand 20 ist das Rastelement 18 entsprechend herausgearbeitet. In der Fig. 4 gut zu erkennen ist die Schräge 19 des Rastelements 18, welche in Montagedrehrichtung eine federnde Auslenkung des Rastelements 18 bewirkt und welche bei Erreichen der Montageendposition ein Einrasten ermöglicht.

Die Seitenwand 15 des Befestigungselements 11 ist in zwei unterschiedlichen Durchmessern ausgeführt, wobei der zur Rückseite weisende Abschnitt einen geringeren Durchmesser als der zur Frontseite hinweisende Abschnitt aufweist und damit ebenfalls die Montage erleichtert.

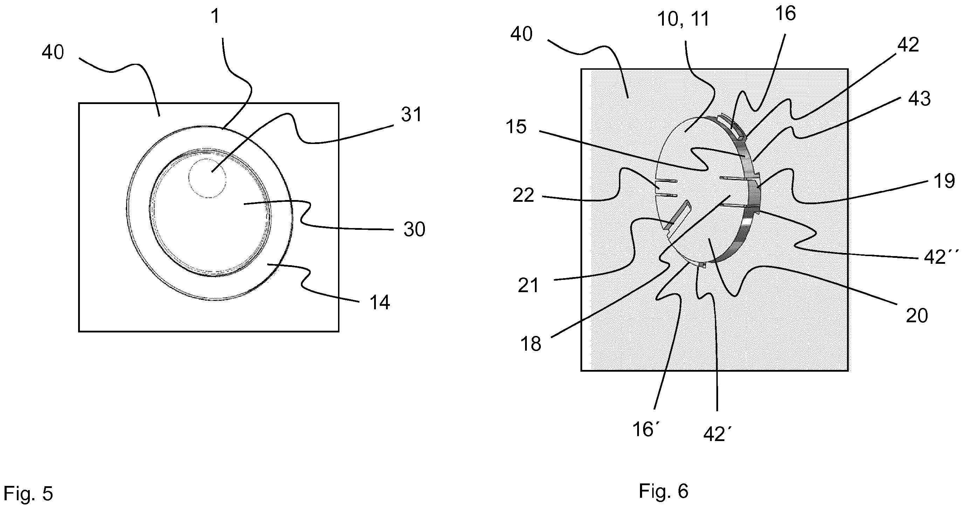

Fig. 5 zeigt eine Frontansicht eines montierten Beleuchtungselements 1 in einem Aufnahmeelement 40.

Fig. 6 zeigt in einer Schrägansicht von hinten einen Ausschnitt eines Aufnahmeelements 40 sowie ein Befestigungselement 11 nach Beginn der Montage in einer Position, bei der zwar das Einschieben bereits erfolgt, die Drehung nach Abschluss des Einschiebens aber noch nicht ausgeführt wurde. Das Befestigungselement 11 ist demnach in einer Position gezeigt, bei der es in die Öffnung des Aufnahmeelements 40 teilweise eingeschoben ist.

In der abgebildeten Ausführungsform umfasst die Außenseite der Seitenwand des Befestigungselements 11 zwei radial nach außen hervorstehende Rippen 16, 16', welche tangential zueinander beabstandet angeordnet sind, um eine hinreichende Sicherheit der Verbindung gegen ein ungewolltes Herausziehen zur Verfügung zu stellen. Die beiden Rippen sind gegenüberliegend über einen Umfangsabschnitt von über 180 Grad verteilt angeordnet auf der Außenseite der Seitenwand 15. Diese Anordnung der beiden Rippen 16, 16' gegenüberliegenden auf der Außenseite unterstützt ein gerades Einschieben der Halterung 10 in die Öffnung 41 des Aufnahmeelements, da einem Verkanten entgegengewirkt werden kann. Ohne Beschränkung auf das vorliegende Ausführungsbeispiel können auch lediglich eine Rippe oder mehr als zwei Rippen vorgesehen sein, welche dann über den Umfangsabschnitt tangential beabstandet zueinander angeordnet sind.

Im vorliegenden Beispiel sind die Rippen tangential zur Mittenachse der Halterung 10 angeordnet. Es ist aber auch möglich, die Rippen wendelartig mit einer leichten Neigung ähnlich einem Gewinde auszubilden, so dass während der Drehbewegung noch eine leichte axiale Bewegung in die Öffnung hinein erfolgt.

In einer weiteren Ausführungsform ist zumindest eine federnde Toleranzrippe an den tangentialen Rippen 16 ausgebildet, welche das axiale Spiel nach Erreichen der Endposition auf nahezu Null reduzieren kann.

Im vorliegenden Beispiel sind die Rippen mit gleicher Länge ausgebildet. Es ist aber auch möglich, im Fall von zumindest zwei Rippen zumindest zwei Rippen mit einer unterschiedlichen Länge auszubilden, um einem Einschieben der Halterung 10 in einer ungewollten Orientierung zur Öffnung 41 entgegenzuwirken.

Die im Beispiel gezeigte Ausnehmung 42 des Aufnahmeelements 40 ist derart gestaltet, dass die Rippe 16 während des Einschiebens hindurchgleiten kann. Ebenso ist für die zweite Rippe 16' eine zweite Ausnehmung 42' in der Öffnung 41 vorgesehen, wo diese während des Einschiebens hindurchgleiten kann. Eine Drehung nach Beendigung des Einschiebens bewirkt, dass die Rippen 16, 16' hinter die sich tangential an die Ausnehmungen 42, 42' anschließenden Stege bewegt werden, so dass eine Hinterschneidung entsteht, die einer axialen Bewegung der Halterung 10 aus der Öffnung heraus entgegensteht.

Die Rippen 16, 16' sind hierzu mit einer Höhe von etwa 0,3 mm ausgebildet, um eine mechanisch hinreichend feste Verbindung zu erhalten. Im Allgemeinen sind Höhen zwischen 0,1 und 15 mm, bevorzugt zwischen 0,2 und 5 mm günstig.

Die Länge der beiden Rippen 16, 16', also ihre tangentiale Ausdehnung zur Mittenachse, beträgt im Beispiel etwa 30°, was einen stabilen Formschluss ermöglicht.

Es hat sich als günstig herausgestellt, wenn die Rippen sich tangential zur Mittenachse über einen Winkel zwischen 5° und 65°, bevorzugt zwischen 10° und 60° und besonders bevorzugt zwischen 15° und 50° erstrecken. Der sich hieraus ergebende Überschneidungsbereich im Einbauzustand ist im Allgemeinen ausreichend, wobei die zur Montage erforderlichen Ausnehmungen 42, 42' auch nicht zu groß sind.

Die in der Darstellung nur teilweise sichtbare Schräge 19 des Rastelements 18 bewirkt bei einer Drehbewegung in die vorgesehene Richtung nach Beendigung des Einschiebens ein Auslenken des Rastelements in eine rückwärtige Richtung, so dass das Rastelement über den Steg 43 des Aufnahmeelements 40 gleiten kann und am Ende der Drehbewegung in die Ausnehmung 42 zurückschnappen kann. Hierdurch wird einer Drehbewegung entgegen dieser Montagedrehrichtung entgegengewirkt, d.h. das Rastelement 18 verhindert einer Drehung der Halterung 10 aus der Montageendposition wieder heraus.

Selbstverständlich ist es auch möglich, mehr als ein Rastelement vorzusehen. So können beispielsweise auch zwei gegenüberliegend angeordnete Rastelement vorgesehen sein. Zu berücksichtigen ist allerdings, dass eine geeignete Möglichkeit zur Entriegelung vorgesehen werden sollte.

Das Rastelement 18 ist in einem Umfangsabschnitt auf der Außenfläche der Seitenwand 15 angeordnet, welcher keine Rippe aufweist. Diese Funktionstrennung ermöglicht es, eine einfache Montage einerseits sowie einen stabilen und sicheren Sitz der Halterung in der Öffnung im Einbauzustand zu gewährleisten. Der tangentiale Abstand der Rippe 16 zu dem Rastelement 18 ist dabei in Übereinstimmung mit dem Abstand der Ausnehmungen 42, 42' gewählt.

Das abgebildete Befestigungselement 11 ist mit einer überwiegend geschlossen gehaltenen Rückwand 20 ausgebildet, welche einen Schutz für den rückwärtigen Bereich einer in dem Befestigungselement 11 gehalterten Leuchte 30 darstellt. Zur Kontaktierung der Leuchte in der Abbildung nicht dargestellt ist eine Aussparung 21 vorgesehen, durch welche ein Anschlusskabel seitlich von außen kommend geführt wird. Dieses wird bis zu einer Durchgangsöffnung in der Abbildung nicht dargestellt und durch diese Durchgangsöffnung der Rückwand hindurch zu der im Inneren angeordneten Leuchte geführt.

Zur Aufnahme und/oder Führung des Anschlusskabels durch die Aussparung 21 ist diese entsprechend dimensioniert und weist im Beispiel eine Tiefe und Breite von etwa 4 mm auf. Breite und Tiefe sind dabei so gestaltet, dass das Anschlusskabel bündig mit der Rückwand 20 abschließt, zumindest nicht hervorsteht. Im Einbauzustand weist die Aussparung 22 nach unten, so dass unabhängig von der Drehrichtung im montierten Zustand immer eine gleiche Kabelverlegung gegeben ist.

Das abgebildete Befestigungselement 11 ist ferner mit einem weiteren Federelement 22 als Toleranzausgleich gegen ein radiales Verschieben ausgebildet. Im Einbauzustand steht dieses mit der Innenwandung des Aufnahmeelements 40 in Wirkzusammenhang und kann auf diese Weise einem Radialspiel entgegenwirken, so dass ein fester Sitz des Beleuchtungselements 1 in der Öffnung 41 gewährleistet ist. Im Beispiel ist das Federelement 22 gegenüberliegend zu dem Rastelement 18 angeordnet.

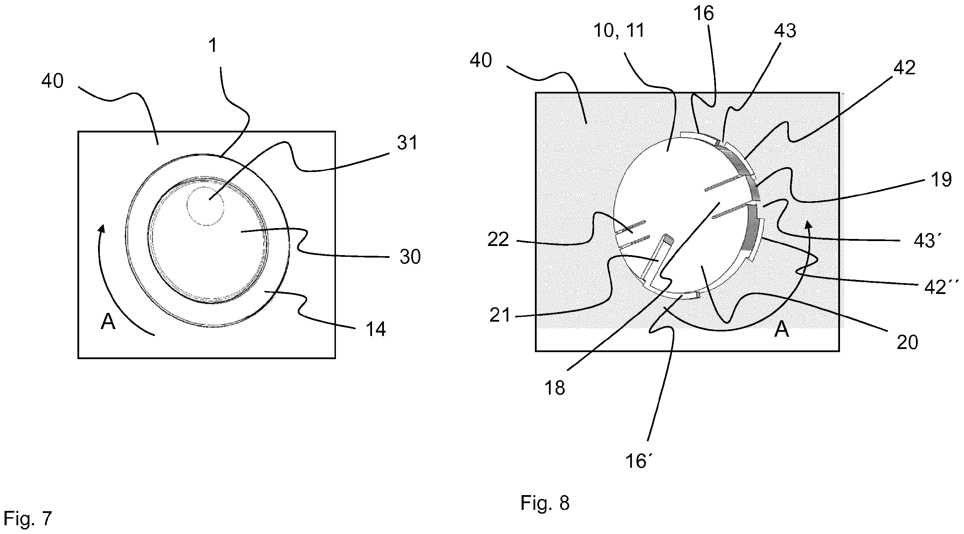

Fig. 7 zeigt eine Frontansicht eines in die Öffnung eingeschobenen Beleuchtungselements 1 in einem Aufnahmeelement 40. Der Pfeil A kennzeichnet die Montagedrehrichtung, in die das Beleuchtungselement gedreht wird bis zum Erreichen der Montageendposition.

Fig. 8 zeigt in einer Schrägansicht von hinten einen Ausschnitt eines Aufnahmeelements 40 sowie ein Befestigungselement 11 nach Abschluss des Einschiebens in einer Orientierung, bei der bereits eine teilweise Drehung in der Montagedrehrichtung erfolgt ist. Der Pfeil A kennzeichnet die Montagedrehrichtung, in die das Beleuchtungselement gedreht wird bis zum Erreichen der Montageendposition. Gut zu erkennen ist in dieser Darstellung die Rippe 16, welche bereits aus der Aussparung 42 herausbewegt wurde und nun über den an die Aussparung angrenzenden Steg 43 des Aufnahmeelements 40 gleitet.

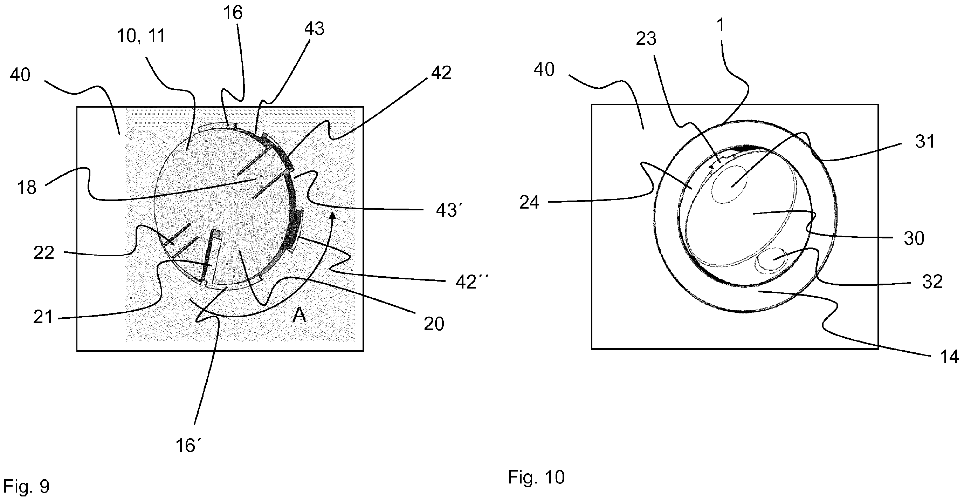

Fig. 9 zeigt in einer Schrägansicht von hinten einen Ausschnitt eines Aufnahmeelements 40 sowie ein Befestigungselement 11 in einer Orientierung, die dem Erreichen der Montageendposition entspricht. Die Drehung in Montagedrehrichtung A ist dabei also abgeschlossen. Gut zu erkennen ist, dass das Rastelement 18 in dieser Orientierung in die Ausnehmung 42 eingreift und somit ein Formschluss gegeben ist.

Fig. 10 zeigt ein als Leselicht ausgeführtes Beleuchtungselement 1, welches in einem Aufnahmeelement 40 montiert ist. Das Beleuchtungselement 1 umfasst eine Leuchte 30, welche kipp- und drehbar in der Öffnung des Befestigungselements 11 gehaltert ist. Die Leuchte 30 ist mit einer Lampe 32 ausgestattet, welche in einer ausgeklappten Position der Leuchte 30 Licht abgeben kann. Das Drehen und Klappen der Leuchte 30 ermöglicht es dabei, unterschiedliche Abgabewinkel des Lichtes zu realisieren. Als Lichtquelle ist eine Lichtemittierende Diode (LED) vorgesehen, wobei selbstverständlich auch andere Lichtquellen verwendet werden können.

Die Drehrichtung der Leuchte ist in dem Ausführungsbeispiel beidseitig, ausgehend von einer Mittenstellung, begrenzt.

Im abgebildeten Beispiel kann das Rastelement 18 sehr einfach durch eine Öffnung 23 auf der Innenwandung 24 erreicht werden, wenn die Leuchte 30 in eine bestimmte Orientierung gedreht und ausgeklappt wird.

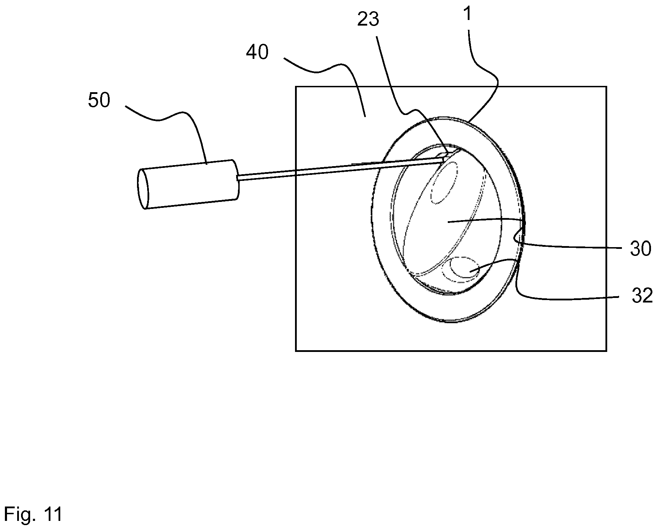

Fig. 11 schließlich zeigt eine weitere fronseitige Ansicht eines als Leselicht ausgeführten Beleuchtungselements 1, welches in einem Aufnahmeelement 40 montiert ist. Mittels eines rein beispielhaft schematisch dargestellten Schraubendrehers 50 kann das Rastelement 18 von vorne, also von der Bedienerseite aus, entriegelt werden durch Ausüben einer Kraft mittels des Schraubendrehers 50.

Zur Entriegelung, etwa für Reparatur- oder Wartungstätigkeiten, kann das Rastelement 18 damit sehr einfach entriegelt werden durch das Aufbringen einer Kraft auf das Rastelement 18. Das erfindungsgemäße Beleuchtungselement 1 kann damit besonders einfach und rasch montiert und auch wieder zerstörungsfrei demontiert werden.

Das erfindungsgemäße Beleuchtungselement 1 weist zudem eine sehr geringe Ausdehnung in Längsrichtung auf, so dass sich eine sehr geringe Einbautiefe ergibt. Das im Beispiel dargestellte Beleuchtungselement 1 weist etwa eine Ausdehnung in Längsrichtung von 1,9 cm (¾ Zoll) auf und kann daher direkt in eine Kopf- oder Nackenstütze eines Fluggastsitzes eingebaut werden, um eine individuelle Leseleuchte zur Verfügung zu stellen.

## Patentansprüche

1. Halterung (10) für eine Leuchte (30) zur lösbaren Befestigung in einer Öffnung eines Aufnahmeelements (40), vorzugsweise in einer kreisförmigen Öffnung (41) eines Aufnahmeelements (40),
umfassend
ein zylinderförmiges Befestigungselement (11) mit einer Seitenwand (15), einer Frontseite (12), und einer gegenüberliegend angeordneten Rückseite (13), **dadurch gekennzeichnet, dass**
das Befestigungselement (11) mit einer Rückwand ausgebildet ist,
die Frontseite (12) eine Öffnung zur Aufnahme der Leuchte (30) umfasst,
die Seitenwand (15) zumindest eine radial nach außen hervorstehende Rippe (16), bevorzugt mehr als eine, vorzugsweise zwei, radial nach außen hervorstehende Rippen (16), welche tangential zueinander beabstandet angeordnet sind, umfasst, und wobei
die Seitenwand (15) zumindest ein radial nach außen hervorstehendes Rastelement (18) umfasst, und wobei das Befestigungselement (11) ein weiteres Federelement (22) als Toleranzausgleich gegen ein radiales und/oder axiales Verschieben umfasst, welches mit der Innenwand des Aufnahmeelements in Wirkzusammenhang steht, wenn das Rastelement (18) eingerastet ist.

2. Halterung (10) nach vorstehendem Anspruch, **dadurch gekennzeichnet, dass** die Seitenwand (15) auf der Frontseite (12) einen über die Außenfläche der Seitenwand radial hervorstehenden Kragen (14) umfasst.

3. Halterung (10) nach einem der vorstehenden Ansprüche, **dadurch gekennzeichnet, dass** die Halterung mehr als eine, vorzugsweise zwei, radial nach außen hervorstehende Rippen (16) umfasst, welche tangential zueinander beabstandet angeordnet sind, wobei die Rippen (16) über einen Umfangsabschnitt von über 180 Grad verteilt angeordnet sind.

4. Halterung (10) nach einem der vorstehenden Ansprüche, **dadurch gekennzeichnet, dass** die Halterung mehr als eine, vorzugsweise zwei, radial nach außen hervorstehender Rippen (16) umfasst, welche tangential zueinander beabstandet angeordnet sind, wobei die Rippen (16) tangential zur Mittenachse angeordnet sind, also in ihrer größten Ausdehnung parallel zu einem Schnitt senkrecht zur Mittenachse des Befestigungselements (11) verlaufen.

5. Halterung (10) nach einem der vorstehenden Ansprüche, **dadurch gekennzeichnet, dass** die Halterung zumindest zwei Rippen (16) umfasst, wobei die zumindest zwei Rippen (16) oder sämtliche Rippen (16) eine identische Länge aufweisen und/oder zumindest zwei Rippen (16) eine unterschiedliche Länge aufweisen.

6. Halterung (10) nach einem der vorstehenden Ansprüche, **dadurch gekennzeichnet, dass** die zumindest eine Rippe (16) eine Höhe, gemessen gegenüber der Außenfläche der Seitenwand, zwischen 0,1 und 15 mm, bevorzugt zwischen 0,2 und 5 mm aufweisen, und/oder dass im Fall von mehr als einer, vorzugsweise zwei, radial nach außen hervorstehender Rippen (16), welche tangential zueinander beabstandet angeordnet sind, die Rippen (16) sich tangential zur Mittenachse über einen Winkel zwischen 5° und 65°, bevorzugt zwischen 10° und 60° und besonders bevorzugt zwischen 15° und 55° erstrecken.

7. Halterung (10) nach einem der vorstehenden Ansprüche, **dadurch gekennzeichnet, dass** das Rastelement (18) in einem Abschnitt der Seitenwand (15) angeordnet ist, welcher keine Rippe aufweist, und/oder dass das Rastelement (18) eine Schräge umfasst, welche in Montagedrehrichtung ein Auslenken des Rastelements (18) bis zum Erreichen einer Montageendposition bewirkt, bei der das Rastelement (18) in eine Ausnehmung des Aufnahmeelements einrasten kann, und/oder dass das Rastelement (18) durch Aufbringen einer Kraft auf das Rastelement (18) in einer Richtung parallel zu Mittenachse entriegelt werden kann.

8. Halterung (10) nach dem vorstehenden Anspruch, **dadurch gekennzeichnet, dass** auf der Rückseite des Befestigungselements (11) zumindest eine Durchgangsöffnung und/oder eine Aussparung für ein Anschlusselement, insbesondere für ein Anschlusskabel, vorgesehen sind.

9. Halterung (10) nach einem der vorstehenden Ansprüche, **dadurch gekennzeichnet, dass** die maximale Ausdehnung der Halterung (10) entlang der Mittenachse höchstens 2,54 cm (1 Zoll), bevorzugt höchstens 1,9 cm (¾ Zoll) und besonders bevorzugt höchstens 1,27 cm (½ Zoll) beträgt.

10. Halterung (10) nach einem der vorstehenden Ansprüche, **dadurch gekennzeichnet, dass** die Halterung (10) von vorne montiert und demontiert werden kann, wobei vorzugsweise die Montage ohne Werkzeug erfolgt und/oder wobei vorzugsweise zur Montage keine zusätzlichen Befestigungselemente und/oder Blenden erforderlich sind.

11. Beleuchtungselement (1), insbesondere Leseleuchte, umfassend eine Halterung (10) nach einem der vorstehenden Ansprüche und eine Leuchte (30) .

12. Verwendung eines Beleuchtungselements (1), insbesondere einer Leseleuchte, nach vorstehendem Anspruch, im Automotive- oder Luftfahrbereich, in einem Zug, in einem Schiff, im Bereich der Architektur oder Innen- oder Außenbeleuchtung.

13. Aufnahmeelement, insbesondere Panel, Sitz oder Fluggastsitz, umfassend eine Halterung für eine Leuchte (30) nach einem der Ansprüche 1 bis 10 oder ein Beleuchtungselement (1) nach Anspruch 11.

## Claims

1. A fixture (10) for a lamp (30) for releasable mounting in an opening of an accommodating element (40), preferably in a circular opening (41) of an accommodating element (40), comprising:
a cylindrical mounting element (11) having a lateral wall (15), a front side (12), and an opposite rear side (13);
**characterised in that**
the mounting element (11) is formed with a rear wall;
the front side (12) has an opening for receiving the lamp (30);
the lateral wall (15) has at least one rib (16) projecting radially outwards, preferably more than one, preferably two ribs (16) projecting radially outwards, which are arranged tangentially spaced apart from each other; and wherein
the lateral wall (15) has at least one latching element (18) projecting radially outwards, and
wherein
the mounting element (11) comprises a further resilient element (22) as a tolerance compensation against radial and/or axial displacement, which is functionally related to the inner wall of the accommodating element, when the latching element (18) is engaged.

2. The fixture (10) according to the preceding claim, **characterised in that** the lateral wall (15) has a collar (14) on the front side (12), which protrudes radially beyond the outer surface of the lateral wall.

3. The fixture (10) according to any one of the preceding claims, **characterised in that** the fixture has more than one, preferably two ribs (16) projecting radially outwards, which are arranged tangentially spaced apart from each other, wherein the ribs (16) are distributed over a circumferential section of more than 180 degrees.

4. The fixture (10) according to any one of the preceding claims, **characterised in that** the fixture has more than one, preferably two ribs (16) projecting radially outwards, which are arranged tangentially spaced apart from each other, wherein the ribs (16) are arranged tangentially to the central axis, that is the largest dimension thereof extends parallel to a section perpendicular to the central axis of the mounting element (11).

5. The fixture (10) according to any one of the preceding claims, **characterised in that** the fixture comprises at least two ribs (16), wherein the at least two ribs (16) or all ribs (16) have an identical length and/or wherein at least two ribs (16) have a different length.

6. The fixture (10) according to any one of the preceding claims, **characterised in that** the at least one rib (16) has a height between 0.1 and 15 mm, preferably between 0.2 and 5 mm, measured relative to the outer surface of the lateral wall; and/or that in the case of more than one, preferably two ribs (16) projecting radially outwards, which are arranged tangentially spaced apart from each other, the ribs (16) extend tangentially to the central axis over an angle between 5° and 65°, preferably between 10° and 60°, and most preferably between 15° and 55°.

7. The fixture (10) according to any one of the preceding claims, **characterised in that** the latching element (18) is arranged in a portion of the lateral wall (15) which has no rib; and/or that the latching element (18) has a bevel which in an installation direction of rotation causes the latching element (18) to be deflected until a final installed position is reached, in which the latching element (18) can engage into a recess of the accommodating element; and/or that the latching element (18) can be unlocked by applying a force onto the latching element (18) in a direction parallel to the central axis.

8. The fixture (10) according to any one of the preceding claims, **characterised in that** at least one passage opening and/or a recess for a connection element, in particular for a connection cable, is provided on the rear side of the mounting element (11).

9. The fixture (10) according to any one of the preceding claims, **characterised in that** the fixture (10) has a maximum dimension along the central axis of not more than 2.54 cm (1 inch), preferably not more than 1.9 cm (¾ inch), and most preferably not more than 1.27 cm (½ inch).

10. The fixture (10) according to any one of the preceding claims, **characterised in that** the fixture (10) can be installed and removed from a front side; wherein preferably the installation is carried out without tools; and/or wherein preferably no additional fastening elements and/or coverings are required for the installation.

11. A lighting element (1), in particular a reading light, comprising a fixture (10) according to any one of the preceding claims and a lamp (30).

12. Use of a lighting element (1), in particular a reading light according to the preceding claim, in the automotive or aviation sector, in a train, in a ship, in the field of architecture or in interior or exterior lighting.

13. An accommodating element, in particular a panel, seat, or airline passenger seat, comprising a fixture for a lamp (30) according to any one of claims 1 to 10 or a lighting element (1) according to claim 11.

## Revendications

1. Support (10) destiné à un luminaire (30) en vue de la fixation amovible dans une ouverture d'un élément de réception (40), de préférence dans une ouverture (41) circulaire d'un élément de réception (40),
comprenant
un élément de fixation (11) de forme cylindrique doté d'une paroi latérale (15), d'une face frontale (12) et d'une face arrière (13) disposée en vis-à-vis,
**caractérisé en ce que**
l'élément de fixation (11) est réalisé avec une paroi arrière,
la face frontale (12) comporte une ouverture destinée à accueillir le luminaire (30),
la paroi latérale (15) comporte au moins une nervure (16) faisant saillie radialement vers l'extérieur, de préférence plus d'une et notamment deux nervures (16) faisant saillie radialement vers l'extérieur, qui sont disposées tangentiellement à distance l'une de l'autre,
et sachant que
la paroi latérale (15) comporte au moins un élément de verrouillage (18) faisant saillie radialement vers l'extérieur, et sachant que l'élément de fixation (11) présente un élément élastique (22) supplémentaire, en tant que compensation de tolérance par rapport à un déplacement radial et/ou axial, qui est en liaison active avec la paroi intérieure de l'élément de réception, lorsque l'élément de verrouillage (18) est encliqueté.

2. Support (10) selon la revendication précédente, **caractérisé en ce que** sur la face frontale (12), la paroi latérale (15) présente un collet (14) faisant radialement saillie par rapport à la surface extérieure de la paroi latérale.

3. Support (10) selon l'une des revendications précédentes, **caractérisé en ce que** le support comporte plus d'une et de préférence deux nervures (16) faisant saillie radialement vers l'extérieur, qui sont disposées tangentiellement à distance l'une de l'autre, les nervures (16) étant réparties sur une portion périphérique de plus de 180 degrés.

4. Support (10) selon l'une des revendications précédentes, **caractérisé en ce que** le support comporte plus d'une et de préférence deux nervures (16) faisant saillie radialement vers l'extérieur, qui sont disposées tangentiellement à distance l'une de l'autre, les nervures (16) étant placées de façon tangentielle par rapport à l'axe central, c'est-à-dire qu'elles s'étendent avec leur plus grande dimension parallèlement à une coupe perpendiculaire à l'axe central de l'élément de fixation (11).

5. Support (10) selon l'une des revendications précédentes, **caractérisé en ce que** le support comporte au moins deux nervures (16), les au moins deux nervures (16) ou la totalité des nervures (16) présentant des longueurs identiques et/ou au moins deux nervures (16) présentant des longueurs différentes.

6. Support (10) selon l'une des revendications précédentes, **caractérisé en ce que** la nervure (16), au nombre d'au moins une, présente une hauteur, mesurée par rapport à la surface extérieure de la paroi latérale, qui est comprise entre 0,1 et 15 mm, de préférence entre 0,2 et 5 mm, et/ou **en ce que**, en présence de plus d'une, de préférence de deux nervures (16) faisant saillie radialement vers l'extérieur, disposées tangentiellement à distance l'une de l'autre, les nervures (16) s'étendent de façon tangentielle à l'axe central, sur un angle compris entre 5° et 65°, de préférence entre 10° et 60°, et de manière particulièrement avantageuse entre 15° et 55°.

7. Support (10) selon l'une des revendications précédentes, **caractérisé en ce que** l'élément de verrouillage (18) est disposé dans une partie de la paroi latérale (15) qui ne présente pas de nervure, et/ou **en ce que** l'élément de verrouillage (18) comporte un plan oblique qui, dans le sens de rotation de montage, provoque une déviation de l'élément de verrouillage (18) jusqu'à atteindre une position finale de montage dans laquelle l'élément de verrouillage (18) peut s'enclencher dans un évidement de l'élément de réception, et/ou **en ce que** l'élément de verrouillage (18), du fait de l'application d'une force sur l'élément de verrouillage (18), peut être déverrouillé dans une direction qui est parallèle à l'axe central.

8. Support (10) selon la revendication précédente, **caractérisé en ce que**, sur la face arrière de l'élément de fixation (11), il est prévu au moins une ouverture de passage et/ou un évidement pur un élément de raccordement, en particulier pour un câble de raccordement.

9. Support (10) selon l'une des revendications précédentes, **caractérisé en ce que** la dimension maximale du support (10) le long de l'axe central est au maximum de 2,54 cm (1 pouce), de préférence au maximum de 1,9 cm (¾ pouce) et de manière particulièrement avantageuse au maximum de 1,27 cm (½ pouce).

10. Support (10) selon l'une des revendications précédentes, **caractérisé en ce que** le support (10) peut être monté et démonté de l'avant, le montage s'effectuant de préférence sans outil et/ou le montage ne nécessitant de préférence pas d'éléments de fixation et/ou de bandeaux supplémentaires.

11. Élément d'éclairage (1), en particulier lampe de lecture, comprenant un support (10) selon l'une des revendications précédentes et un luminaire (30).

12. Utilisation d'un élément d'éclairage (1), en particulier d'une lampe de lecture, selon la revendication précédente, dans le domaine automobile ou aéronautique, dans un train, dans un navire, dans le domaine de l'architecture ou de l'éclairage intérieur ou extérieur.

13. Élément de réception, en particulier panneau, siège ou siège de passager d'avion, comprenant un support pour un luminaire (30) selon l'une des revendications 1 à 10 ou un élément d'éclairage (1) selon la revendication 11.
